# EUROPÄISCHE PATENTANMELDUNG

(11) **EP 4 125 187 A2**
(43) Veröffentlichungstag der Anmeldung: **01.02.2023**
(21) Anmeldenummer: 22191751.1
(22) Anmeldetag: 11.06.2021
(51) Int. Cl.: H02K 3/24, H02K 5/15, H02K 5/173, H02K 5/20, H02K 9/19, H02K 15/14

(54) **LAGERANORDNUNG IN EINEM ELEKTROMOTOR, ELEKTROMOTOR MIT EINER SOLCHEN LAGERNANORDNUNG UND VERWENDUNG EINES ELEKTROMOTORS**

(30) Priorität: 24.06.2020 DE 102020116661
(62) Teilanmeldung aus: 21178979.7
(71) Anmelder: Witzenmann GmbH, 75175 Pforzheim (DE)
(72) Erfinder: Ehrenberger, David, 75203 Königsbach-Stein (DE)
(74) Vertreter: LBP Lemcke, Brommer & Partner Patentanwälte mbB

(57) **Zusammenfassung**

Vorgeschlagen wird eine Lageranordnung (1) in einem Elektromotor, umfassend: einen radial außenliegenden Statorring (4); einen radial innenliegenden Rotor (5), der in dem Statorring (4) drehbar gelagert ist; und ein erstes Lagerbauteil (14), an dem ein erstes Ende (6a) einer Abtriebswelle (6) des Elektromotors drehbar gelagert ist, welches erste Lagerbauteil (14) an dem Statorring (4) drehfest abgestützt ist; welche Lageranordnung (1) sich dadurch auszeichnet, dass das erste Lagerbauteil (14) form- und/oder reib-/stoffschlüssig mit dem Statorring (4) verbunden ist und insbesondere über seinen Umfang verteilt eine Mehrzahl von ersten axialen Vorsprüngen (14a) aufweist, die in Umfangsrichtung voneinander beabstandet sind, mit welchen ersten Vorsprüngen (14a) das erste Lagerbauteil (14) an dem Statorring (4) festgelegt ist. Zumindest der Statorring (4) und der Rotor (5) sind innerhalb eines umfänglich geschlossenen Statorträgers (3), vorzugsweise in Form einer Hülse, höchst vorzugsweise einer geraden Kreiszylinderhülse angeordnet, und der Statorträger (3) ist zumindest abschnittweise von einer Hülse (2) umgeben, wobei zwischen der Hülse (2) und dem Statorträger (3) wenigstens ein erster Strömungsraum (7) zum Umströmen des Statorträgers (3) mit einem Temperierfluid (8) ausgebildet ist, vorzugsweise wobei die Hülse (2) in Bereichen eine gewellte Oberfläche mit radial nach außen gerichteten Wellenbergen und radial nach innen gerichteten Wellentälern aufweist und den Statorträger in Scheitelbereichen (2a) der Wellentäler berührt, um zwischen den Scheitelbereichen (2a) den ersten Strömungsraum (7) auszubilden. Die Lageranordnung zeichnet sich aus durch wenigstens einen zweiten Strömungsraum (11) für ein Temperierfluid in thermischer Wirkverbindung mit einem zu temperierenden Bauteil (12), vorzugsweise einer Leistungselektronik des Elektromotors, in fluidscher Verbindung mit dem ersten Strömungsraum (7), wobei eine Fluidverbindung zwischen erstem Strömungsraum (7) und zweitem Strömungsraum (11) durch das erste Lagerbauteil (14) verläuft. Außerdem vorgeschlagen wird ein Elektromotor mit einer solchen Lageranordnung (1) und eine bevorzugte Verwendung desselben.

## Beschreibung

Die Erfindung betrifft eine Lageranordnung in einem Elektromotor gemäß Anspruch 1, umfassend einen radial außenliegenden Statorring; einen radial innen liegenden Rotor, der in dem Statorring drehbar gelagert ist; und ein erstes Lagerbauteil, an dem ein erstes Ende einer Abtriebswelle des Elektromotors drehbar gelagert ist, welches erste Lagerbauteil an dem Statorring drehfest abgestützt sowie form- und/oder reib-/stoffschlüssig mit dem Statorring verbunden ist. Zumindest der Statorring und der Rotor sind innerhalb eines umfänglich geschlossenen Statorträgers, vorzugsweise in Form einer Hülse, höchst vorzugsweise einer geraden Kreiszylinderhülse angeordnet. Der Statorträger ist zumindest abschnittweise von einer Hülse umgeben, wobei zwischen der Hülse und dem Statorträger wenigstens ein erster Strömungsraum zum Umströmen des Statorträgers mit einem Temperierfluid ausgebildet ist, vorzugsweise wobei die Hülse in Bereichen eine gewellte Oberfläche mit radial nach außen gerichteten Wellenbergen und radial nach innen gerichteten Wellentälern aufweist und den Statorträger in Scheitelbereichen der Wellentäler berührt, um zwischen den Scheitelbereichen den ersten Strömungsraum auszubilden.

Die Erfindung betrifft auch einen Elektromotor mit einer Lageranordnung gemäß Anspruch 13.

Elektromotoren sind heutzutage regelmäßig in einem Gehäuse (Elektromotorengehäuse) angeordnet, das über einen thermischen Pressverband mit dem Stator des Elektromotors gefügt wird, welcher Stator bei einem sog. Innenläufermotor als Statorring ausgebildet ist und den Rotor umgibt. Eine zugehörige Toleranzkette des Rotorspalts (Spalt zwischen Stator und Rotor) verläuft dabei von dem Stator über einen regelmäßig vorhandenen Statorträger, einen mit dem Statorträger verbundenen Lagerschild (zur drehbaren Lagerung des ersten Endes der Abtriebswelle des Elektromotors) und das zugehörige Lager zum Rotor, wobei sich die Fertigungstoleranzen aller genannten Bauteile im ungünstigsten Fall addieren und verstärken. Hierbei ist insbesondere die Verbindung von Statorträger und Lagerschild als nachteilig anzusehen, die nach dem Stand der Technik vorzugsweise stoffschlüssig ausgeführt wird. Die Ausbildung der hiermit regelmäßig einhergehenden Schweißverbindung ist mit thermischem Verzug behaftet, was sich besonders ungünstig auf die vorstehend genannte Toleranzkette auswirkt. Dies kann sich negativ auf die Laufeigenschaften und die Effizienz des Elektromotors auswirken.

Neben der beschriebenen Toleranzproblematik spielt bei Elektromodulen die Temperierung während des Betriebs eine große Rolle. Dies betrifft auch weitere Bauteile oder Komponenten, wie z.B. eine Leistungselektronik.

DE 10 2018 109 421 A1 offenbart ein temperiertes Elektromodul, bei dem außen an einer den Statorträger umgebenden (Kühl-)Hülse weitere zu kühlende Komponenten angeordnet sein können, vgl. Figur 19. Dies vergrößert den erforderlichen Bauraum speziell in radialer Richtung in nachteiliger Weise. Außerdem ist die erreichbare Kühlwirkung durch geometrische Zwänge beschränkt.

CN 111 130 256 A zeigt ein Motorgehäuse, das von einer Kühlhülse umgeben ist.

Auch in AT 216 617 B ist eine flüssigkeitsgekühlte elektrische Maschine beschrieben.

DE 10 2016 217 107 A1 beschreibt einen Stator für eine elektrische Maschine mit einer Kühlhülse.

DE 10 2015 205 783 A1 offenbart eine Kühlmantelanordnung zur Aufnahme eines Elektromotors mit einem Innenmantelabschnitt und mit einem Außenmantelabschnitt, wobei zwischen dem Innenmantelabschnitt und dem Außenmantelabschnitt eine Fluidführungsstruktur zur Führung eines (Temperier-)Fluids ausgebildet ist, was aus Toleranzgründen schwierig zu realisieren ist.

DE 10 2018 201 983 A1 offenbart bei einem Elektromotor zur Kühlung von Elektronikkomponenten, die innerhalb des Motorgehäuses angeordnet sind, einen zusätzlichen Elektronikkühlkörper, der in einem Lagerschild des Motors angeordnet ist. Dieser relativ komplexe Aufbau ermöglicht nur eine recht geringe Kühlleistung.

US 2014/232217 A1 lehrt eine kombinierte Kühlung für Leistungselektronik und den eigentlichen Motor bei einem Elektromotor, wozu Fluid aus einem ersten Bereich für die Leistungselektronik in einen zweiten Bereich strömt, welcher zweite Bereich den Motor schraubenförmig umgibt und zwischen zwei geeignet geformten Gehäuseteilen des Motors ausgebildet ist, was ebenfalls aus Toleranzgründen schwierig zu realisieren ist.

Es besteht Bedarf an einer Lageranordnung in einem Elektromodul, welche über eine Verkürzung der Toleranzkette zur Erhöhung der Steifigkeit des Elektromotorengehäuses beitragen kann und sich insbesondere für den Leichtbau eignet, womit eine Bauraum- und Werkstoffeinsparung verbunden sein kann. Es besteht auch Bedarf an einem entsprechend ausgerüsteten Elektromotor.

Dabei ist sicherzustellen, dass sowohl das Elektromodul an sich als auch weitere zu temperierende Bauteile einfach, effizient und ohne erhöhten Bauraumbedarf temperiert, insbesondere gekühlt, werden können.

Die Erfindung löst die o.g. Aufgaben mittels einer Lageranordnung in einem Elektromotor mit den Merkmalen des Anspruchs 1 sowie mittels eines Elektromotors mit den Merkmalen des Anspruchs 13 und schlägt außerdem eine neuartige Verwendung eines Elektromotors vor.

Vorteilhafte Weiterbildungen der zugrundeliegenden Idee sind jeweils Gegenstand von Unteransprüchen.

Bei einer erfindungsgemäßen Lageranordnung in einem Elektromotor, umfassend einen radial außenliegenden Stator oder Statorring; einen radial innenliegenden Rotor, der in dem Statorring drehbar gelagert ist; und ein erstes Lagerbauteil, an dem ein erstes Ende einer Abtriebswelle des Elektromotors drehbar gelagert ist, welches erste Lagerbauteil an dem Statorring drehfest abgestützt sowie form- und/oder reib-/stoffschlüssig mit dem Statorring verbunden ist, sind zumindest der Statorring und der Rotor innerhalb eines umfänglich geschlossenen Statorträgers, vorzugsweise in Form einer Hülse, höchst vorzugsweise einer geraden Kreiszylinderhülse angeordnet, und der Statorträger ist zumindest abschnittweise von einer Hülse umgeben, wobei zwischen der Hülse und dem Statorträger wenigstens ein erster Strömungsraum zum Umströmen des Statorträgers mit einem Temperierfluid ausgebildet ist, vorzugsweise wobei die Hülse in Bereichen eine gewellte Oberfläche mit radial nach außen gerichteten Wellenbergen und radial nach innen gerichteten Wellentälern aufweist und den Statorträger in Scheitelbereichen der Wellentäler berührt, um zwischen den Scheitelbereichen den ersten Strömungsraum auszubilden. Die Lageranordnung zeichnet sich aus durch wenigstens einen zweiten Strömungsraum für ein Temperierfluid in thermischer Wirkverbindung mit einem zu temperierenden Bauteil, vorzugsweise einer Leistungselektronik des Elektromotors, in fluidscher Verbindung mit dem ersten Strömungsraum, wobei eine Fluidverbindung zwischen erstem Strömungsraum und zweitem Strömungsraum durch das erste Lagerbauteil verläuft.

Die erfindungsgemäße Lageranordnung sieht vor, dass der Statorträger zumindest abschnittsweise von einer Hülse umgeben ist, wobei zwischen der Hülse und dem Statorträger wenigstens ein erster Strömungsraum zum Umströmen des Statorträgers mit einem Temperierfluid ausgebildet ist. Entsprechend kann die genannte Hülse gemäß ihrer bevorzugten Verwendung auch als "Kühlhülse" bezeichnet werden, weil sie in der Regel dazu dienen wird, den Elektromotor im Betrieb mittels des Temperierfluids zu kühlen. Die Erfindung ist aber keinesfalls auf eine Kühlwirkung beschränkt. Eine solche Ausgestaltung ist grundsätzlich aus früheren Anmeldungen der Anmelderin bekannt (z.B. DE 10 2018 109 421 A1), auf die insoweit Bezug genommen wird, sodass hierauf an dieser Stelle nicht weiter einzugehen ist.

Eine Weiterbildung der erfindungsgemäßen Lageranordnung kann vorsehen, dass die (Kühl-)Hülse in Bereichen eine gewellte Oberfläche mit radial nach außen gerichteten Wellenbergen und radial nach innen gerichteten Wellentälern aufweist und den Statorträger in Scheitelbereichen der Wellentäler berührt, um zwischen den Scheitelbereichen einen ersten Strömungsraum auszubilden. Vorteilhafterweise ist die genannte Hülse in den genannten Scheitelbereichen mit einer Außenseite des Statorträgers fest verbunden, beispielsweise stoffschlüssig, um ein Übersprechen von Temperierfluid aus einem Teil des ersten Strömungsraums in einen axial benachbarten zweiten Teil des Strömungsraums nach Möglichkeit zu vermeiden. Vorteilhafterweise kann der genannte erste Strömungsraum schraubengangartig ausgebildet sein und den Statorträger entsprechend umgeben. Auf diese Weise lässt sich eine effiziente Temperierung (Kühlung) des Statorträgers und damit des gesamten Elektromotors bzw. der Lageranordnung erreichen.

Bei der erfindungsgemäßen Lageranordnung ist außerdem vorgesehen, dass diese noch einen zweiten Strömungsraum für ein Temperierfluid aufweist, welches Temperierfluid bzw. welcher zweite Strömungsraum in thermischer Wirkverbindung mit einem zu temperierenden Bauteil steht. Bei diesem (weiteren) zu temperierenden Bauteil kann es sich vorzugsweise um eine Leistungselektronik des Elektromotors handeln, welche regelmäßig bestimmte Schaltungsbauteile aufweist, die sich beim Betrieb des Elektromotors stark erwärmen können. Um eine möglichst einfache und synergetische Anordnung zu schaffen, befindet sich der zweite Strömungsraum in fluidischer Verbindung mit dem ersten Strömungsraum, um beide Strömungsräume gemeinsam an einen Fluidkreislauf anschließen zu können.

Diese Fluidverbindung verläuft durch das erste Lagerbauteil hindurch. Auf diese Weise ist es insbesondere möglich, das zu temperierende Bauteil bzw. den zweiten Strömungsraum axial benachbart der restlichen Lageranordnung anzubringen, was Vorteile hinsichtlich der Bauraumausnutzung mit sich bringt.

Bevorzugt ist das erste Lagerbauteil direkt und unmittelbar, d.h. ohne Zwischenteil mit dem Statorring verbunden. Dabei kann vorgesehen sein, dass das erste Lagerbauteil mit dem Statorring über wenigstens eine Ausnehmung in der Mantelfläche des Statorrings mit Letzterem verbunden ist. Dies umfasst eine Ausgestaltungsvariante, bei der das erste Lagerbauteil einen umfänglich geschlossenen, optional konischen Ring aufweist, der wiederum über einen (Kegel-)Pressverband mit dem Statorring verbunden ist.

Höchst vorzugsweise weist das erste Lagerbauteil allerdings über seinen Umfang verteilt eine Mehrzahl von ersten axialen Vorsprüngen aufweist, die in Umfangsrichtung voneinander beabstandet sind, mit welchen ersten Vorsprüngen das erste Lagerbauteil an dem Statorring festgelegt sein kann.

Im Rahmen der vorliegenden Beschreibung werden die Begriffe "Stator" und "Statorring" als Synonyme verwendet, weil der Stator bei einem sogenannten Innenläufermotor ringförmig ausgebildet ist und den Rotor aufnimmt.

Ein erfindungsgemäßer Elektromotor zeichnet sich aus durch eine erfindungsgemäße Lageranordnung.

Eine neuartige Verwendung eines erfindungsgemäßen Elektromotors umfasst dessen Verwendung als Traktionsmotor in einem Kraftfahrzeug, wobei der Elektromotor vorzugsweise über einen Kühlmittelkreislauf des Kraftfahrzeugs mit einem Temperierfluid versorgt wird.

Das vorstehend genannte erste Lagerbauteil, welches vorteilhafter Weise über seinen Umfang verteilt eine Mehrzahl von ersten axialen Vorsprüngen aufweist, wird im Rahmen der vorliegenden Beschreibung aufgrund seines Aussehens auch als "Lagerkrone" bezeichnet. Wie auch anhand der weiter unten beschriebenen Figuren noch deutlich wird, kann die Lagerkrone - bei entsprechender Ausgestaltung der erfindungsgemäßen Lageranordnung - lokal in Aussparungen an dem Stator oder Statorring eingreifen und entsprechend Lage bzw. Drehmoment usw. direkt an den im selben Bauteil angeordneten Lagersitz übertragen. Der genannte Lagersitz dient dazu, das genannte erste Ende einer Abtriebswelle des Elektromotors drehbar zu lagern, wie weiter oben beschrieben. Der hinsichtlich der Toleranzkette nachteilige Statorträger kann somit (in seiner Eigenschaft als statisch wirksames Bauteil) grundsätzlich entfallen.

Der Statorträger, der den Statorring nach Art einer Hülse umgibt, kann somit auf eine Wärmeübertragungs- und Dichtfunktion bzw. ggf. auf eine Funktion als Zugelement (zur Aufnahme von Zugkräften) reduziert werden.

Es ist bei entsprechender Weiterbildung des Erfindungsgegenstands möglich, den Stator (Statorring) wie bisher thermisch zu fügen.

Zusätzlich zu dem genannten ersten Lagerbauteil (vorliegend auch als B-seitige Lagerkrone bezeichnet) kann auf einer anderen Seite der Lageranordnung zusätzlich noch ein weiterer, A-seitiger Kronenring als zweites Lagerbauteil vorgesehen und nach erfolgter Statormontage montiert werden.

Bei entsprechender Weiterbildung weist der A-seitige Kronenring endständig zwei Arten von Koni auf, von denen einer zur Positionierung des Kronenrings am Stator bzw. Statorring in Umfangsrichtung dient, während der zweite Konus für ein minimales Aufweiten des Statorträgers verwendet werden kann. Auf diese Weise ist es möglich, den genannten Kronenring unter Vorspannung mit dem Statorträger und einer optional zusätzlich noch vorhandenen Kühlhülse bei Verbesserung der Schweißbarkeit zu verschweißen.

Auf diese Weise ist es möglich, den Stator oder Statorring komplett zu fixieren, wobei die Wärmeübertragung sichergestellt ist und der Statorträger, sofern vorhanden, (extrem) dünnwandig hergestellt werden kann. Letzteres verbesserte nochmals die mögliche Wärmeübertragung und sorgt für ein besonders geringes Gewicht. Dabei ist die Toleranzkette äußerst kurz ausgebildet.

Aufgrund der geringen erforderlichen Wandstärke des Statorträgers, der nach entsprechender Weiterbildung der Erfindung nur die Last des thermischen Pressverbands und gegebenenfalls die Last einer axialen Vorspannung aufnehmen muss, ist eine gegenüber dem Stand der Technik deutlich verbesserte Wärmeübertragung möglich.

Bei einer vorteilhaften Weiterbildung der erfindungsgemäßen Lageranordnung kann vorgesehen sein, dass die ersten (axialen) Vorsprünge einstückig mit dem restlichen ersten Lagerbauteil verbunden bzw. integral mit diesem ausgebildet sind. Auf diese Weise ist das erste Lagerbauteil einfach zu fertigen und weist eine besonders gute Stabilität auf. Es liegt jedoch auch im Rahmen der Erfindung, das erste Lagerbauteil zunächst als einfachen Ring ("Kronenring") auszuführen und anschließend die optionalen ersten axialen Vorsprünge ("Kronenzacken") mit dem Ring zu verbinden, vorzugsweise stoffschlüssig.

Als besonders vorteilhaft hat es sich erwiesen, wenn bei einer entsprechenden Weiterbildung der Erfindung das erste Lagerbauteil als ein als Guss- oder Schmiedeteil hergestellt ist. Derartige Bauteile zeichnen sich durch besonders gute Stabilitätseigenschaften aus.

Bei einer anderen Weiterbildung der erfindungsgemäßen Lageranordnung kann vorgesehen sein, dass das erste Lagerbauteil einen an die Lageranordnung oder einen Raum zur Aufnahme des Statorrings und des Rotors stirnseitig verschließenden Lagerschild ausbildet. Falls erforderlich, kann das erste Lagerbauteil bzw. der Lagerschild einen Durchbruch aufweisen, vorzugsweise einen mit seiner Öffnungsfläche im Wesentlichen quer zur Umfangsrichtung orientierten Durchbruch, höchst vorzugsweise in einem Übergangsbereich von dem Lagerschild zu wenigstens einem der Vorsprünge. Auf diese Weise lässt sich ein Gewicht des ersten Lagerbauteils verringern, was eine leichte Bauweise der erfindungsgemäßen Lageranordnung begünstigen kann.

Um eine sichere und formstabile Verbindung zwischen dem ersten Lagerbauteil und dem Statorring zu gewährleisten, was sich günstig auf die bereits erwähnte Toleranzkette bzw. die erreichbare Stabilität auswirkt, hat es sich als vorteilhaft herausgestellt, wenn die ersten (axialen) Vorsprünge des ersten Lagerbauteils über den Umfang gleichmäßig verteilt angeordnet sind. Das erste Lagerbauteil erhält so insgesamt das Aussehen einer Art Krone, woraus sich der bereits genannte Begriff "Lagerkrone" ableitet. Die genannten ersten (axialen) Vorsprünge stellen dementsprechend die Zacken der Krone dar.

Bei wieder einer anderen Weiterbildung der erfindungsgemäßen Lageranordnung kann vorgesehen sein, dass die ersten Vorsprünge mit ihrer jeweiligen Außenseite in radialer Richtung gegenüber einem Außendurchmesser des Statorrings und/oder gegenüber einem Außendurchmesser des Lagerschilds bzw. des ersten Lagerbauteils nach innen versetzt angeordnet oder ausgebildet sind. Vorzugsweise ist dies zumindest im Bereich eines dem Statorring zugewandten Endes der genannten ersten (axialen) Vorsprünge der Fall. Der entsprechende Rücksprung kann nur wenige Zehntelmillimeter betragen und dient insbesondere dazu, die Toleranzanforderungen in dem genannten Bereich zu verringern, was sich günstig auf die Fertigungskosten auswirken kann.

Bei wieder einer anderen Weiterbildung der erfindungsgemäßen Lageranordnung kann vorgesehen sein, dass das erste Lagerbauteil wenigstens mit einem seiner ersten (axialen) Vorsprünge, vorzugsweise mit allen seinen ersten Vorsprüngen, in entsprechende Ausnehmungen an dem Statorring eingreift. Auf bestimmte Vorteile dieser Anordnung wurde weiter oben bereits hingewiesen. Insbesondere führt sie zu einer genaueren relativen Positionierung der genannten Bauteile und erhöht die Stabilität des Verbandes.

Wieder eine andere Weiterbildung der erfindungsgemäßen Lageranordnung sieht vor, dass das erste Lagerbauteil mit wenigstens einem seiner ersten Vorsprünge, vorzugsweise mit allen seinen ersten Vorsprüngen, stoffschlüssig, formschlüssig und/oder kraftschlüssig mit dem Statorring verbunden ist. Auf diese Weise ergibt sich eine äußerst stabile Lageranordnung.

Außerdem kann in Weiterbildung der erfindungsgemäßen Lageranordnung noch vorgesehen sein, dass dieses ein zweites Lagerbauteil (wie bereits erwähnt) aufweist, das auf einer dem ersten Lagerbauteil abgewandten Seite des Statorrings angeordnet ist. Diese abgewandte Seite wird im Rahmen der vorliegenden Beschreibung auch als "A-Seite" bezeichnet, während die andere Seite, auf der das erste Lagerbauteil angeordnet ist, auch als "B-Seite" bezeichnet wird. Entsprechend kann das erste Lagerbauteil auch als B-seitige Lagerkrone oder "B-Lagerkrone" bezeichnet werden, während das zweite Lagerbauteil auch als "A-seitiger Kronenring" oder einfach als "A-Lagerring" bezeichnet werden kann.

In Abgrenzung zu der B-Lagerkrone kann bei entsprechender Weiterbildung der Erfindung vorgesehen sein, dass das zweite Lagerbauteil über seinen Umfang eine im Wesentlichen konstante axiale Erstreckung aufweist und entsprechend als einfacher A-Lagerring ausgebildet ist. Eine solche Ausgestaltung ist einfacher und entsprechend kostengünstiger herzustellen als die Ausgestaltung als Kronenring mit axialen Vorsprüngen ("Zacken").

Wieder eine andere Weiterbildung der erfindungsgemäßen Lageranordnung sieht jedoch vor, dass auch das zweite Lagerbauteil über seinen Umfang eine Mehrzahl von axialen zweiten Vorsprüngen aufweist, die vorzugsweise gleichmäßig über den Umfang des zweiten Lagerbauteils verteilt angeordnet sein können. Höchst vorzugsweise sind die genannten zweiten (axialen) Vorsprünge einstückig bzw. integral mit dem restlichen zweiten Lagerbauteil ausgebildet. Dies kann im Wesentlichen einer Ausgestaltung des ersten Lagerbauteils entsprechen, auf deren Vorteile bereits weiter oben hingewiesen wurde.

Noch eine andere Weiterbildung der erfindungsgemäßen Lageranordnung sieht vor, dass die zweiten Vorsprünge mit ihrer jeweiligen Außenseite in radialer Richtung gegenüber einem Außendurchmesser des Statorrings nach innen versetzt angeordnet oder ausgebildet sind. Vorzugsweise gilt dies an einem dem Statorring zugewandten Ende der genannten zweiten Vorsprünge. Auch eine solche Ausgestaltung führt dazu, dass hinsichtlich der Herstellung des zweiten Lagerbauteils zumindest bereichsweise geringere Toleranz-Anforderungen zu stellen sind, was sich günstig auf die Herstellungskosten auswirken kann.

Eine besonders bevorzugte Weiterbildung der erfindungsgemäßen Lageranordnung sieht außerdem vor, dass das zweite Lagerbauteil mit wenigstens einem seiner zweiten (axialen) Vorsprünge, vorzugsweise mit allen seinen zweiten Vorsprüngen, in entsprechende Ausnehmungen an dem Statorring eingreift. Auch dies kann zu einer erhöhten Positioniergenauigkeit und Verbindungsstabilität beitragen, worauf weiter oben für das erste Lagerbauteil bereits hingewiesen wurde.

Bei wieder einer anderen Weiterbildung kann das zweite Lagerbauteil mit wenigstens einem seiner zweiten Vorsprünge, vorzugsweise mit allen seinen zweiten Vorsprüngen, stoffschlüssig, formschlüssig und/oder kraftschlüssig mit dem Statorring verbunden sein. Auch hier trägt eine entsprechende Ausgestaltung der Verbindung wieder zu einer erhöhten Verbindungsstabilität der Gesamtanordnung bei.

Wie das erste Lagerbauteil kann auch das zweite Lagerbauteil ein Guss- oder Schmiedeteil sein. Auf entsprechende Vorteile wurde weiter oben bereits hingewiesen.

Bei einer besonders bevorzugten Weiterbildung kann die erfindungsgemäße Lageranordnung noch ein drittes Lagerbauteil aufweisen, an dem ein zweites Ende einer Abtriebswelle des Elektromotors drehbar gelagert ist. Das dritte Lagerbauteil kann über das zweite Lagerbauteil an dem Statorring drehfest abgestützt sein. Auf diese Weise entsprechen das dritte Lagerbauteil und das zweite Lagerbauteil zusammen funktional in etwa dem ersten Lagerbauteil. Eine solche Zweiteilung des Lagerbauteils auf einer Seite der Lageranordnung ist erforderlich, um beispielsweise den Rotor nach Herstellung der restlichen Lageranordnung montieren zu können und/oder um (beispielsweise zu Wartungszwecken) Zugang zum Inneren der erfindungsgemäßen Lageranordnung zu haben.

Bei entsprechender Weiterbildung der Erfindung kann in diesem Kontext vorgesehen sein, dass das dritte Lagerbauteil einen die Lageranordnung oder einen Raum zur Aufnahme des Statorrings und des Rotors stirnseitig verschließenden Lagerschild ausbildet. Außerdem kann das dritte Lagerbauteil eine (angeformte) Befestigungsstruktur zum Befestigen der Lageranordnung an einem externen Bauteil aufweisen. Auf bestimmte Eigenschaften der ersten genannten Alternative wurde weiter oben bereits hingewiesen. Wenn das dritte Lagerbauteil die genannte Befestigungsstruktur zum Befestigen der Lageranordnung an einem externen Bauteil aufweist, lässt sich auf diese Weise unter Umständen ein zusätzliches Bauteil einsparen, was bei der oftmals beengten Bauraumsituation insbesondere bei Kraftfahrzeugen entsprechend vorteilhaft sein kann.

Bei wieder einer anderen Weiterbildung der erfindungsgemäßen Lageranordnung kann vorgesehen sein, dass das dritte Lagerbauteil lösbar an dem zweiten Lagerbauteil befestigt oder befestigbar ist, z.B. angeschraubt/anschraubbar. Dabei kann zwischen dem dritten Lagerbauteil und dem zweiten Lagerbauteil ein Dichtmittel, beispielsweise ein Dichtring, angeordnet sein, um einen Innenraum der Lageranordnung gegenüber der Außenwelt (fluid)dicht abzuschließen.

Bei einer äußerst vorteilhaften Weiterentwicklung der erfindungsgemäßen Lageranordnung kann vorgesehen sein, dass auch das dritte Lagerbauteil ein Guss- oder Schmiedeteil ist. Auf entsprechende Vorteile einer solchen Ausgestaltung wurde bereits hingewiesen.

Eine wieder andere, äußerst bevorzugte Weiterbildung der erfindungsgemäßen Lageranordnung sieht vor, dass wenigstens eine der Ausnehmungen des Statorrings, in die das erste Lagerbauteil bzw. das zweite Lagerbauteil eingreift, in zumindest einer Raumrichtung einen schrägen Verlauf bezüglich einer Längsachse der Lageranordnung aufweist. Entsprechend kann vorgesehen sein, dass wenigstens die in diese Ausnehmungen eingreifenden ersten und/oder zweiten Vorsprünge einen komplementären schrägen Verlauf ihrer jeweiligen Außenkontur aufweisen. Auf diese Weise ergibt sich eine besonders innige Verbindung der Ausnehmungen mit den betreffenden Vorsprüngen, die gleichzeitig auch eine gewisse Zentrier- bzw. Positionierwirkung entfalten kann.

Die erfindungsgemäße Lageranordnung sieht vor, dass zumindest der Statorring und der Rotor innerhalb eines umfänglich geschlossenen Statorträgers, vorzugsweise in Form einer Hülse, höchst vorzugsweise einer geraden Kreiszylinderhülse, angeordnet sind. Dieser Statorträger wurde weiter oben bereits erwähnt. Er muss jedoch aufgrund der im Rahmen der vorliegenden Erfindung bzw. bei entsprechender Weiterbildung der vorgesehenen ersten und zweiten Lagerbauteile nicht die statisch stabilisierende Funktion übernehmen, die ihm nach dem Stand der Technik regelmäßig zukommt und kann deshalb entsprechend leicht ausgeführt sein, was auch eine Entwärmung der Lageranordnung begünstigen kann.

Im Zuge einer ersten Weiterbildung dieser Ausgestaltung ist vorgesehen, dass der Statorträger auf seiner einen Stirnseite durch das erste Lagerbauteil verschlossen ist, während er auf seiner anderen Seite durch das zweite Lagerbauteil und das dritte Lagerbauteil verschlossen ist. Auf diese Weise ergibt sich ein geschlossener Innenraum zur sicheren Aufnahme des Stators bzw. Statorrings und des Rotors des Elektromotors.

Eine äußerst bevorzugte andere Weiterbildung der erfindungsgemäßen Lageranordnung sieht vor, dass der Statorträger kraftschlüssig und/oder stoffschlüssig mit wenigstens einem der Elemente Statorring, erstes Lagerbauteil, zweites Lagerbauteil und drittes Lagerbauteil verbunden ist. Insbesondere ein Pressverband oder eine Schweißverbindung hat sich hierbei als günstig erwiesen.

Es wurde bereits darauf hingewiesen, dass dem Statorträger im Rahmen entsprechender Weiterbildungen der Erfindung nicht die ihm beim Stand der Technik zukommende stabilisierende Funktion zukommt. Nach dem Stand der Technik ist der Statorträger oftmals als ein schweres und (kosten)aufwendig herzustellendes Gussteil oder dergleichen ausgebildet. Im Zuge einer Weiterbildung der vorliegenden Erfindung ist es dagegen möglich, den Statorträger als Bauteil mit wenigstens einer Lage aus einem metallischen Werkstoff auszubilden, welche Lage eine Dicke von nur 0,5 mm bis 3,0 mm, bevorzugt nur etwa 1,5 mm aufweist.

Bei einer konsequenten Weiterbildung der erfindungsgemäßen Idee ist es bei entsprechender Weiterbildung der erfindungsgemäßen Lageranordnung sogar möglich, den Statorträger als Bauteil mit wenigstens einer Lage aus einem metallischen Werkstoff auszubilden, welche Lage lediglich eine Dicke von 0,1 mm bis 0,3 mm, bevorzugt etwa 0,2 mm aufweist.

Da der Statorträger möglicherweise nur noch eine Dichtheitsanforderung bzw. eine Anforderung hinsichtlich einer Zugbelastung erfüllen muss, kann es bei wieder einer anderen Weiterbildung der erfindungsgemäßen Lageranordnung sogar möglich sein, den Statorträger als Bauteil mit wenigstens einer Lage aus einem nicht metallischen Werkstoff herzustellen, vorzugsweise einem Kunststoff. Bei konsequenter Weiterentwicklung dieser Idee ist es sogar möglich, den Statorträger komplett in Kunststoff auszubilden.

Noch eine Weiterbildung der erfindungsgemäßen Lageranordnung kann vorsehen, dass die Hülse wenigstens eine Zuleitung zum Zuleiten von Temperierfluid zu dem ersten Strömungsraum und wenigstens eine Ableitung zum Ableiten von Temperierfluid aus dem ersten Strömungsraum aufweist. Auf diese Weise kann der erste Strömungsraum kontinuierlich mit einem Temperierfluid durchströmt werden, welches in effizienter Art und Weise Wärme von dem Statorträger abführt. Entsprechend ist in der Regel das Temperierfluid an der Zuleitung kühler als das Temperierfluid an der Ableitung.

Eine im Rahmen der vorliegenden Erfindung besonders bevorzugte Ausgestaltung der Lageranordnung sieht vor, dass zur Herstellung von Hülse und Statorträger folgendermaßen vorgegangen wird bzw. wurde: Ein zumindest doppelwandiges Rohrelement bzw. ein entsprechender Rohrabschnitt wird bzw. wurde
a) an seinen Enden mit einer umlaufenden fluiddichten Verbindung seiner beiden Wandungen versehen, vorzugsweise durch Verschweißen;
b) optional zur Herstellung der genannten Wellenberge und Wellentäler in den Scheitelbereichen der (zu schaffenden) Wellentäler mit einer fluiddichten Verbindung seiner beiden Wandungen versehen, vorzugsweise durch Verschweißen;
c) zumindest abschnittweise radial um wenigstens eines der Elemente Statorring, erstes Lagerbauteil und zweites Lagerbauteil herum angeordnet;
d) durch Einleiten eines Umformmediums zwischen seine beiden Wandungen zumindest mit seiner radial innenliegenden Wandung als Statorträger von außen gegen das wenigstens eine Element gemäß Merkmal c) umgeformt; und
e) mit der Zuleitung und der Ableitung versehen.

Hierdurch bildet sich der Statorträger und formt sich - bei gleichzeitiger Ausbildung der (Kühl-)Hülse - nach innen gegen zumindest eines der unter c) genannten Elemente an, sodass die gesamte Lageranordnung besonders einfach und kostengünstig herstellbar ist. Das Verschweißen gemäß b) schafft eine einfache Möglichkeit, den geplanten Verlauf der (Kühl-)Kanäle festzulegen, die sich anschließend durch Einleiten des Umformmediums gemäß d) quasi von selbst ergeben.

Noch eine andere Weiterbildung der erfindungsgemäßen Lageranordnung sieht vor, dass zwischen dem Statorträger und wenigstens einem der Elemente Statorring, erstes Lagerbauteil und zweites Lagerbauteil ein Wärmeüberträgermedium angeordnet ist. Bei diesem Wärmeüberträgermedium kann es sich um eine Wärmeleitpaste handeln. Auf diese Weise soll ein Wärmeübergang von den genannten Elementen auf den Statorträger und ggf. von dort zu der Kühlhülse bzw. dem Temperierfluid erleichtert werden, um insbesondere eine Entwärmung der gesamten Anordnung zu verbessern.

Es wurde bereits darauf hingewiesen, dass ein erfindungsgemäßer Elektromotor sich durch eine erfindungsgemäße Lageranordnung auszeichnet. Bei entsprechender Weiterbildung eines solchen Elektromotors kann vorgesehen sein, dass dieser ein Temperierfluid in dem ersten Strömungsraum und/oder in dem zweiten Strömungsraum aufweist. Vorzugsweise handelt es sich bei dem genannten Temperierfluid in den beiden Strömungsräumen um ein und dasselbe Temperierfluid, weil die Strömungsräume im Rahmen eines gemeinsamen Fluidkreislaufs verbunden sein können.

Wie bereits angegeben wurde, betrifft eine bevorzugte Verwendung eines erfindungsgemäßen Elektromotors die Verwendung als Traktionsmotor in einem Kraftfahrzeug. Dabei kann der Elektromotor über einen Kühlmittelkreislauf des Kraftfahrzeugs mit dem Temperierfluid versorgt werden. Die Erfindung ist jedoch keinesfalls auf eine solche Ausgestaltung beschränkt, sondern es liegt auch im Rahmen der Erfindung, für den Elektromotor einen eigenen Temperierfluid-Kreislauf vorzusehen.

Nachfolgend werden noch weitere Varianten der Erfindung bzw. der erfindungsgemäßen Lageranordnung beschrieben:
Bei einer entsprechenden Weiterbildung ist möglich, zumindest das erste Lagerbauteil mit innen liegenden Strömungskanälen in Form einer fluidführenden Variante auszubilden, um die Entwärmung weiter zu verbessern. Die genannten Kanäle können mit dem genannten ersten und/oder zweiten Strömungsraum fluidleitend verbunden sein.

Das bereits angesprochene Verschweißen (stoffschlüssige Verbinden) der Lagerkrone bzw. des ersten Lagerbauteils und des Kronenrings bzw. des zweiten Lagerbauteils mit dem Stator oder Statorring bzw. einem Stator-Blechpaket vereinfacht die Montage dadurch, dass Lagerkrone (erstes Lagerbauteil) und Kronenring (zweites Lagerbauteil) bereits vor Montage einer Statorkühleinheit (bevorzugt bestehend aus Statorträger und Kühlhülse) an dem Stator angebracht werden können, sodass anschließend die genannte Statorkühleinheit aufgeschrumpft und gegebenenfalls verschweißt werden kann, wobei unzulässiger thermischer Verzug insbesondere beim Einsatz von Laserstrahlschweißen nicht zu erwarten ist. Alternativ kann auch eine Verschraubung vorgesehen werden. Insbesondere wenn die B-Lagerkrone und der A-Lagerring (Kronenring) verschraubt werden, kann der Stator bzw. Statorring vorteilhafterweise dazwischen verspannt werden.

Es wurde bereits darauf hingewiesen, dass die ersten und/oder zweiten (axialen) Vorsprünge (Kronenzacken) vorzugsweise konisch ausgestaltet sein können. Je nach Richtung der konischen Abschrägung kann auf diese Weise auch ein Formschluss bei der Verbindung der genannten Lagerbauteile mit dem Statorring ausgebildet werden. Auf diese Weise ist es möglich, an der genannten Stelle auf die Ausbildung einer stoffschlüssigen Verbindung ganz zu verzichten, sodass nicht die Gefahr eines thermischen Verzugs gegeben ist.

Eine vorteilhafte Variante der erfindungsgemäßen Lageranordnung kann vorsehen, dass sogenannte Statornuten innerhalb eines sog. Wickelkopfs des Statorrings als Aufnahme für die Kronenzacken verwendet werden. Dies führt zu entsprechenden Synergieeffekten. Außerdem sind die Kronenzacken hierbei auch für eine zusätzliche Fixierung oder sogar für eine konduktive Anbindung der Statorwicklungen verwendbar.

Es ist bei entsprechender Weiterbildung auch möglich, die Lagerkrone derart auszuführen, dass eine Induktion von elektrischen Strömen vom Wickelkopf im Rotor durch Abschirmung unterbunden wird. Zu diesem Zweck kann die Lagerkrone vorteilhafterweise als Schale (Abschirm-Innenschale) aufgebaut werden und kontaktiert den Stator innerhalb des betreffenden Wickelkopfs (für die Statorwicklungen), um die Abschirmung zu gewährleisten. Der Wickelkopf ist vorzugsweise radial größer als die Schale. Die Abschirm-Innenschale trägt keine Last, sondern bewirkt lediglich eine Abschirmung und ggf. eine Strömungsführung für ein Temperierfluid (z.B. Luft oder ein Dielektrikum). Sie kann auch als separates Bauteil (nicht einstückig mit der restlichen Lagerkrone) ausgeführt sein.

Eine Ausführung, bei der die Last vom Statorring zum Lagerteil außen, d.h. auf einem größeren Durchmesser als der Wickelkopf, abgeführt wird und eine relativ dünnwandige Schale zur Abschirmung innerhalb des Wickelkopfs angebracht ist, hat den Vorteil, dass der benötigte Bauraum zwischen Wickelkopf/Statorring und Rotor deutlich kleiner ausfällt. Die Abschirm-Innenschale trägt keine Last, sondern bewirkt lediglich eine Abschirmung und ggf. eine Strömungsführung für ein Temperierfluid (z.B. Luft oder ein Dielektrikum).

Die Kronenzacken (erste Vorsprünge) sind im Rahmen der Erfindung optional. Beispielsweise besteht die Möglichkeit, eine Lagerkrone, die über einen lokalen Pressverband mit dem Statorring verbunden ist, mit einem zusätzlichen Kronenendring auszustatten, um aus dem Pressverband resultierende Umfangsspannungen aufzunehmen. Der Übergang vom Lagerbauteil zu dem Kronenendring für den Pressverband kann in Form von (umfänglich beabstandeten) Stegen ausgeführt werden. Ist eine abschirmende Wirkung gewünscht, wie oben beschrieben, sollte der Übergang möglichst geschlossen ausgeführt werden.

Die optionalen Kronenzacken können dabei in Statornuten eingreifen.

Es wurde bereits darauf hingewiesen, dass die Lagerkrone fluidführend ausgeführt sein kann, um den eigentlichen Lagersitz, den Wickelkopf (der über sogenanntes "Potting" konduktiv angebunden sein kann) und zumindest teilweise auch den Stator zu temperieren. Wie ebenfalls bereits erwähnt wurde, kann hierbei eine Fluidübergabe von der Lagerkrone an die Statorkühlung (Kühlhülse) von Vorteil sein. Die entsprechende Fluidanschlüsse können in der Lagerkrone im Wesentlichen frei positioniert werden.

Wenn die weiter oben genannten ersten und zweiten Strömungsräume fluidisch miteinander verbunden sind, kann die Lagerkrone bzw. können die Lagerkronen, wenn sowohl A-seitig als auch B-seitig entsprechende Lagerkronen vorgesehen sind, bei einer vorteilhaften Variante der Erfindung die Kühlhülse von innen, das heißt in radial positiver Richtung, mit dem Temperierfluid beschickt werden. Hierbei ist insbesondere möglich, entsprechende Fluidwege durch den Statorträger (in Richtung zu der (Kühl-)Hülse) hindurchzuführen. Wenn speziell das Temperierfluid durch das B-seitige Lagerbauteil zugeführt und durch das A-seitige Lagerbauteil abgeführt wird, oder umgekehrt, ist ein zusätzlicher radialer Aufbau zur Be- und Entschickung der Statorkühlung verzichtbar, was den erforderlichen Bauraum verkleinern kann.

Weiterhin besteht in Anlehnung an den Stand der Technik weiterhin die Möglichkeit, ein auftretendes Moment und eventuelle weitere Lasten über den Statorträger abzuführen, wobei vorzugsweise eine stoffschlüssige Verbindung zwischen Statorträger einerseits und Lagerteil bzw. Statorring Verwendung findet.

Bei weiterer Integration kann die Lagerkrone auch derart ausgestaltet sein, dass an einer dem Elektromotor abgewandten Seite Aufnahmen zur Montage und Entwärmung von elektrischen und elektronischen Bauteilen vorgesehen sind, wie beispielsweise eines Resolvers und einer Leistungselektronik; hierauf wurde weiter oben bereits hingewiesen.

Aufseiten der Lagerteile besteht zusätzlich die Möglichkeit, eine Doppel-Kronenform vorzusehen, die auch als "Diabolo-Form" bezeichnet werden kann und ein Ringteil umfasst, das axial auf beiden Seiten Vorsprünge aufweisen kann. Eine solche Ausgestaltung kann insbesondere B-seitig Verwendung finden. Auf diese Weise ist die Lagerkrone auf ihrer dem Stator abgewandten Seite auch als Gehäuse für eine Leistungselektronik oder dergleichen verwendbar, wenn insbesondere zusätzlich noch ein entsprechender Verschlussdeckel vorgesehen wird. Es kann jedoch auch vorgesehen sein, das genannte Gehäuse, insbesondere für die Leistungselektronik, als von der Lageranordnung separates Bauteil vorzusehen, was je nach Anforderung vorteilhaft sein kann.

Wenn die aus dem Stator abzuführenden Wärmemengen nur gering sind, kann alternativ auch auf eine Variante zurückgegriffen werden, die außen am Stator oder am Statorträger Kühlrippen oder Kühlpins aufweist und die Verlustwärme, gegebenenfalls aktiv, direkt an die Umgebungsluft abgibt. Insbesondere auf das Vorsehen einer separaten (Kühl-)Hülse kann dann verzichtet werden. Sofern der Stator hinreichend gegen Umgebungseinflüsse geschützt ist, kann der Statorträger auch vollständig entfallen. Der genannte Schutz gegen Umgebungseinflüsse kann vorzugsweise durch eine Beschichtung erfolgen, die nach Montage der Lagerkrone(n) aufgebracht wird.

Wesentliche Vorteile der vorliegenden Erfindung sind die stark verkürzte Toleranzkette, die mögliche Nutzung der Eigensteifigkeit des Stators zu Versteifungszwecken durch entsprechende Funktionsintegration (Wegfall bzw. weniger solide Ausgestaltung des Statorträgers), der direkte "Kraftfluss" zwischen Rotor und Lagersitz bzw. erstem/zweitem Lagerbauteil sowie der mögliche Verzicht auf ein axial durchgehendes Gussgehäuse des Elektromotors, was eine starke Verringerung des Gesamtgewichts mit sich bringt.

Weitere Eigenschaften und Vorteile der Erfindung ergeben sich aus der nachfolgenden Beschreibung von Ausführungsbeispielen anhand der Zeichnungen.
- Figur 1: zeigt eine erste Ausgestaltung der erfindungsgemäßen Lageranordnung bzw. einen entsprechenden Elektromotor, teilweise im Längsschnitt;
- Figur 2: zeigt eine Variante des Gegenstands der Figur 1 mit geändertem zweiten Lagerbauteil;
- Figur 3: zeigt eine andere Variante der Lageranordnung gemäß Figur 1;
- Figur 4: zeigt eine weitere Variante der Lageranordnung gemäß Figur 1; und
- Figur 5: zeigt eine wieder andere Variante der Lageranordnung gemäß Figur 1.

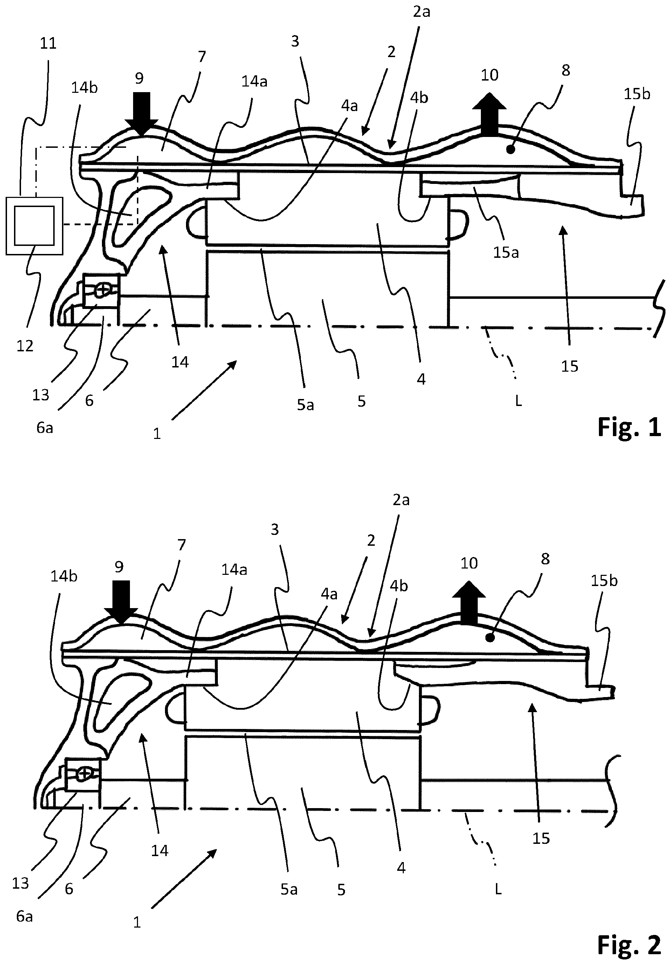

Figur 1 zeigt eine erfindungsgemäße Lageranordnung in einem Elektromotor, welche Lageranordnung insgesamt mit dem Bezugszeichen 1 bezeichnet ist. Sie umfasst, von außen nach innen, eine gewellte Kühlhülse 2, einen Statorträger 3 in Form eines geraden Kreiszylinders, einen Stator oder Statorring 4 des Elektromotors sowie einen radial innerhalb des Stators 4 drehbar gelagerten Rotor 5 mit einer entsprechenden (Abtriebs-)Welle 6. Bezugszeichen 5a bezeichnet einen Spalt zwischen Stator bzw. Statorring 4 und Rotor 5. Bezugszeichen L bezeichnet die Längsachse der Anordnung. Zwischen der Kühlhülse 2 und dem Statorträger 3 ist ein (beispielsweise schraubengangförmiger) erster Strömungsraum 7 ausgebildet, der im Betrieb von einem Temperierfluid 8 durchströmt wird. Für das Temperierfluid 8 weist der Strömungsraum 7 eine Zuleitung 9 und eine Ableitung 10 auf, was in Figur 1 durch die schwarzen Blockpfeile symbolisiert ist. Vorteilhafterweise besteht Anschluss an ein (übergeordnetes) Kühlsystem, beispielsweise eines Kraftfahrzeugs (nicht gezeigt). Außerdem ist ein zweiter Strömungsraum 11 vorgesehen, in dem ein weiteres zu temperierendes Bauteil 12 angeordnet ist, insbesondere eine Leistungselektronik für den Elektromotor. Wie anhand der gestrichelten bzw. strichpunktierten Linien in Figur 1 angedeutet, ist der zweite Strömungsraum 11 fluidisch mit dem ersten Strömungsraum 7 verbunden. Auf die möglichen Verbindungsarten wird weiter unten noch genauer eingegangen.

Der Stator bzw. Statorring 4 ist bezüglich der Welle 6 gelagert mittels des eigentlichen Lagers 13, welches Lager 13 an einem ersten Lagerbauteil 14 angeordnet ist. Das Lagerbauteil 14 ist nach Art einer sogenannten Lagerkrone ausgebildet und weist - über den Umfang verteilt - eine Anzahl von ersten axialen Vorsprüngen 14a auf, die in der vorliegenden Beschreibung auch als Kronenzacken bezeichnet wurden. Das Lagerbauteil 14 greift mit den Vorsprüngen 14a in entsprechende Ausnehmungen 4a an dem Statorring 4 ein, wie dargestellt. Die Kronenzacken 14a und die Ausnehmungen 4a können (komplementär) konisch ausgebildet sein, um eine verbesserte Fixierung/Zentrierung zu erreichen. Das erste Lagerbauteil 14 bildet einen Lagerschild aus, der einen Raum zur Aufnahme des Statorrings 4 und des Rotors 5 stirnseitig verschließt und zugleich als Sitz für das Lager 13 dient, welches Lager 13 zur Lagerung eines ersten Endes 6a der Abtriebswelle 6 dient. Das erste Lagerbauteil 14 kann bei Bezugszeichen 14b Durchbrüche speziell in einem Übergangsbereich von dem Lagerschild zu den Kronenzacken 14a aufweisen, um das Bauteilgewicht insgesamt zu verringern. Die Durchbrüche 14b sind mit ihrer Öffnungsfläche, die in Figur 1 bei Bezugszeichen 14b erkennbar ist, im Wesentlichen quer zur Umfangsrichtung orientiert. Wie dargestellt, kann das erste Lagerbauteil 14 speziell im Bereich der Kronenzacken 14a einen (gegenüber dem Statorträger 3 bzw. dem Stator 4 und/oder dem Lagerschild) verringerten Außendurchmesser aufweisen, um die Anforderungen an die Herstellungstoleranzen zu verringern. Erstes Lagerbauteil 14, Statorträger 3 und Kühlhülse 2 können am linken oberen Rand der in Figur 1 gezeigten Anordnung gemeinsam stoffschlüssig verbunden sein.

Im rechten Teil der Anordnung ist bei Bezugszeichen 15 ein zweites Lagerbauteil dargestellt, welches ebenso wie das erste Lagerbauteil 14 als Schmiedeteil oder Gussteil ausgeführt sein kann. Wie das erste Lagerbauteil 14 weist das zweite Lagerbauteil 15 bei der Ausgestaltung gemäß Figur 1 axiale Vorsprünge 15a auf, die bevorzugt gleichmäßig über den Umfang der Anordnung verteilt angeordnet sind. Mit diesen Vorsprüngen 15a greift das zweite Lagerbauteil 15 in entsprechende Ausnehmungen 4b des Statorrings 4 ein, um das zweite Lagerbauteil 15, wie auch das erste Lagerbauteil 14, drehfest am Statorring 4 abzustützen. Auch das zweite Lagerbauteil 15 kann im Bereich der Vorsprünge 15a konisch ausgebildet sein, wobei die Konizität in diesem Bereich bevorzugt mit entsprechend komplementär-konisch ausgebildeten Ausnehmungen 4b des Statorrings 4 korrespondiert.

Die Ausnehmungen 4a, 4b des Statorrings 4 können durch ohnehin vorhandene Wicklungsnuten des Stators gebildet sein, sodass sich eine entsprechende Funktionsintegration ergibt. Kommt ein segmentierter Stator zum Einsatz, kann die Lagerkrone (das erste Lagerbauteil 14) auch die Fixierung der Statorsegmente übernehmen.

Im Gegensatz zu dem ersten Lagerbauteil 14 ist das zweite Lagerbauteil 15 stirnseitig nicht geschlossen ausgebildet, sondern weist einen umlaufenden Vorsprung 15b bzw. eine umlaufende Schulter auf, auf die weiter unten noch genauer eingegangen wird.

Die bereits angesprochene Fluidzufuhr zu dem zweiten Strömungsraum 11 erfolgt durch das erste Lagerbauteil 14 hindurch, sodass in radialer Richtung kein zusätzlicher Bauraum benötigt wird. Dies ist in Figur 1 durch die gestrichelte Verbindung schematisch dargestellt. Alternativ kann jedoch auch gemäß der strichpunktierten Verbindungslinie eine äußere Verbindung zu dem zweiten Strömungsraum 11 erfolgen, was nicht Teil der Erfindung ist.

Auch im Bereich des zweiten Lagerbauteils 15 können Kühlhülse 2, Statorträger 3 und zweites Lagerbauteil 15 bevorzugt gemeinsam stoffschlüssig miteinander verbunden sein. Ansonsten kommt zumindest zwischen den Lagerbauteilen 14, 15 und dem Statorträger 3 auch eine kraftschlüssige Verbindung in Betracht, wohingegen Statorträger 3 und Kühlhülse 2 vorteilhafterweise immer stoffschlüssig miteinander verbunden sind - nicht nur an den jeweiligen Enden bzw. Stirnseiten, sondern auch im Bereich von Scheiteln bzw. Scheitellinien 2a der Kühlhülse 2, in welchen Bereichen die Kühlhülse 2 mit ihrer Innenseite an einer Außenseite des Statorträgers 3 anliegt. Eine derartige Verbindung vermeidet den Übertritt von Temperierfluid 8 aus einem Schraubengangkanal in einen benachbarten Schraubengangkanal, was die Kühlhülse 2 bzw. deren Kühlwirkung ansonsten "kurzschließen" würde.

Die stirnseitige Öffnung der Lageranordnung 1 im Bereich des zweiten Lagerbauteils 15 sorgt für eine Zugänglichkeit des Innenraums, insbesondere zum Montieren des Rotors 5 und der Abtriebswelle 6 sowie zu Wartungs- und Reparaturzwecken.

Die Anordnung aus Kühlhülse 2 und Statorträger 3 kann vorliegend derart ausgebildet werden, dass zunächst die spätere Kühlhülse 2 und der Statorträger 3 als konzentrische Rohrleitungsabschnitte ausgebildet werden, die nur endseitig und im Bereich der genannten Scheitellinien 2a (stoffschlüssig) miteinander verbunden sind. Anschließend wird die so geschaffene Anordnung über den Statorring 4 bzw. vorteilhafterweise die fertige Anordnung aus Statorring 4 und den ersten und zweiten Lagerbauteilen 14, 15 gezogen. Durch Beaufschlagen mit einem Umformmedium im Bereich zwischen den beiden Lagen wird dann die eigentliche Kühlhülse 2 geformt und zugleich der Statorträger 3 in radialer Richtung nach innen gegen die genannten Elemente in Anlage gebracht bzw. kraftschlüssig mit diesen verbunden.

Bei entsprechender Ausgestaltung der Lagerbauteile 14, 15 kommt dem Statorträger 3 keine eigentlich tragende Funktion mehr zu, sodass die Anforderungen an den Statorträger 3 grundsätzlich auf Dichtigkeitsanforderungen bzw. auf eine hinreichende Stabilität in Zugrichtung (in Richtung parallel zur Längsachse L) reduziert werden können. Demgemäß ist eine relativ dünnwandige Ausbildung des Statorträgers 3 möglich. Es kommt sogar grundsätzlich in Betracht, den Statorträger 3 abweichend vom Stand der Technik nicht in Metall, sondern in einem geeigneten Kunststoff auszubilden, worauf bereits hingewiesen wurde.

Im Folgenden soll nun anhand der Figuren 2 bis 4 auf bestimmte Besonderheiten von weiteren Ausgestaltungen der Erfindung näher eingegangen werden, wobei gleiche Bezugszeichen gleiche oder zumindest gleichwirkende Elemente angeben. Zur Vermeidung von Wiederholungen erfolgt bei der Beschreibung der Figuren 2 bis 4 eine Beschränkung auf solche Merkmale, die von den vorstehend beschriebenen Merkmalen der Figur 1 abweichen.

In Figur 2 betrifft dies die Ausgestaltung des zweiten Lagerbauteils 15. Auf eine Darstellung des zweiten Strömungsraums 11 mit einem darin enthaltenen, zu kühlenden Element 12 wurde aus Gründen der Übersichtlichkeit in den Figuren 2 bis 4 verzichtet.

Gemäß der Darstellung in Figur 2 ist das zweite Lagerbauteil 15 mit über seinem Umfang konstanter Längsabmessung ausgebildet, nimmt also eher die Form eines Rings als einer Krone an. Im Bereich der (umfänglich durchgängigen) Ausnehmung 4b des Statorrings 4 sowie an dem entsprechenden Ende des zweiten Lagerbauteils 15 ist deutlich die bereits angesprochene Konizität zu erkennen. Gemäß der Darstellung in Figur 2 ist nur eine entsprechende Abschrägung in einer die Längsachse L enthaltenen Ebene vorgesehen. Eine entsprechende zusätzliche Abschrägung kann beim Gegenstand der Figur 1 auch in einer Richtung in die Zeichenebene hinein bzw. aus der Zeichenebene heraus existieren.

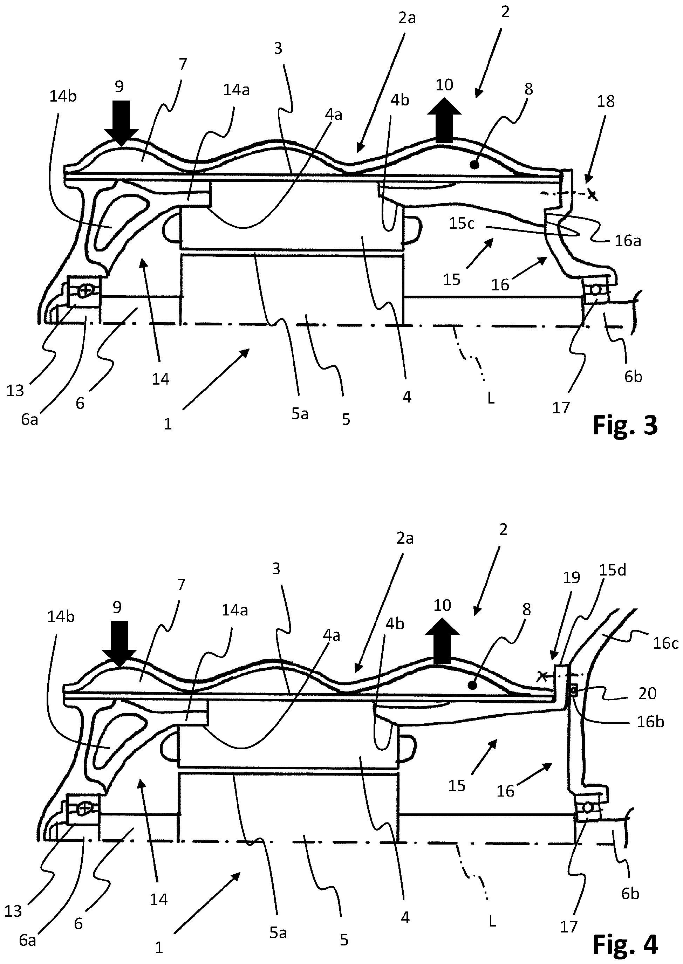

Bei der Ausgestaltung gemäß Figur 3 ist zusätzlich bei Bezugszeichen 16 noch ein drittes Lagerbauteil dargestellt, welches den Raum innerhalb der Lageranordnung auf der anderen (rechten) Stirnseite verschließt. Dieses dritte Lagerbauteil 16 dient als Lagersitz für ein weiteres Lager 17, welches ein anderes Ende 6b der Welle 6 lagert. Das zweite Lagerbauteil 15 und das dritte Lagerbauteil 16 sind bei Bezugszeichen 18 miteinander verbunden, vorzugsweise verschraubt. Für eine innige Verbindung von zweitem Lagerbauteil 15 und drittem Lagerbauteil 16 weist Letzteres bei Bezugszeichen 16a eine umlaufende Schulter auf, die mit der Formgebung (Ausnehmung) des zweiten Lagerbauteils 15 bei Bezugszeichen 15c korrespondiert.

Das zweite Lagerbauteil 15 ist in Figur 3 entsprechend dem zweiten Lagerbauteil 15 gemäß Figur 2 ausgebildet. Die Erfindung ist jedoch keinesfalls hierauf beschränkt; selbstverständlich kann das zweite Lagerbauteil 15 bei der Ausgestaltung gemäß Figur 3 auch entsprechend dem zweiten Lagerbauteil 15 gemäß Figur 1 ausgebildet sein, was das Vorsehen von axialen Vorsprüngen 15a anbelangt.

Schließlich zeigt Figur 4 eine leichte Abwandlung der Ausgestaltung gemäß Figur 3, was das zweite Lagerbauteil 15 und das dritte Lagerbauteil 16 anbelangt.

Das zweite Lagerbauteil 15 weist stirnseitig, an seiner dem Stator 4 abgewandten Seite, eine radiale Abwinklung bzw. einen radial umlaufenden Flansch 15d auf, die/der über den Statorträger 3 hinausgeht, an welchem umlaufenden Flansch 15d das dritte Lagerbauteil 16 bei Bezugszeichen 19 angeschraubt ist. In diesem Bereich ist zwischen dem zweiten Lagerbauteil 15 und dem dritten Lagerbauteil 16 ein Dichtelement 20 in Form eines umlaufenden Dichtrings angeordnet, insbesondere in einer entsprechenden Ausnehmung 16b an dem dritten Lagerbauteil 16. Radial außerhalb dieser Ausnehmung 16b bzw. der Verbindungsstelle 20 weist das dritte Lagerbauteil 16 einen Fortsatz 16c auf, über den die gesamte Lageranordnung 1 mit weiteren, externen Komponenten (nicht gezeigt) verbindbar ist.

Auch hier entspricht die weitere Ausgestaltung des zweiten Lagerbauteils 15 (in seinem dem Stator 4 zugewandten Bereich) grundsätzlich der Ausgestaltung gemäß Figur 2. Eine in diesem Bereich abweichende Ausgestaltung gemäß Figur 1 ist möglich.

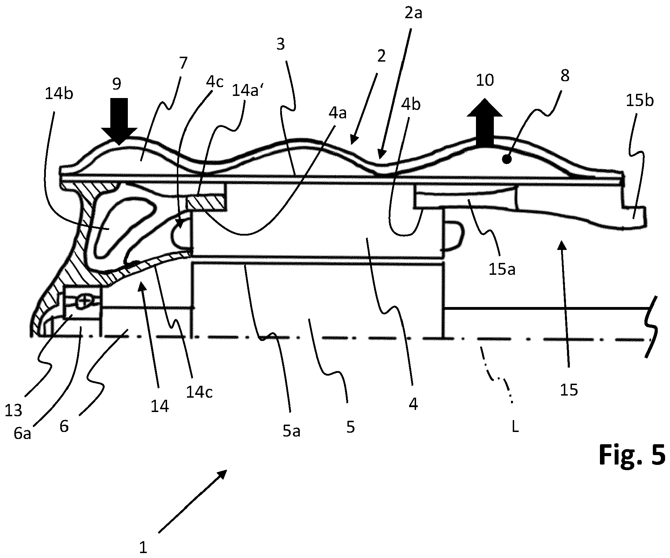

Die Ausgestaltung in Figur 5 entspricht im Wesentlichen derjenigen in Figur 1. Unterschiedlich ist die Ausgestaltung des Lagerbauteils 14 im Bereich 14a', wo anstelle der Kronenzacken ein umfänglich geschlossener Ring ausgebildet ist. Das Lagerbauteil 14 greift mit dem Ring 14a' in eine entsprechende umlaufende Ausnehmung 4a an dem Statorring 4 ein, wie dargestellt. Der Ring 14a' und die Ausnehmung 4a können abweichend von der Darstellung (komplementär) konisch ausgebildet sein, um eine verbesserte Fixierung/Zentrierung zu erreichen.

Bei Bezugszeichen 14c ist eine Abschirm-Innenschale gezeigt, die den Stator 4 innerhalb des betreffenden Wickelkopfs (für die Statorwicklungen bei Bezugszeichen 4c) kontaktiert, um eine Abschirmung zu gewährleisten. Der Wickelkopf ist vorzugsweise radial größer als die Schale 14c, wie dargestellt. Die Abschirm-Innenschale 14c trägt keine Last, sondern bewirkt lediglich eine Abschirmung und ggf. eine Strömungsführung für ein Temperierfluid (z.B. Luft oder ein Dielektrikum). Sie kann auch als separates Bauteil (nicht einstückig mit dem restlichen Lagerbauteil 14) ausgeführt sein.

## Patentansprüche

1. Lageranordnung (1) in einem Elektromotor, umfassend:
einen radial außenliegenden Statorring (4);
einen radial innenliegenden Rotor (5), der in dem Statorring (4) drehbar gelagert ist; und
ein erstes Lagerbauteil (14), an dem ein erstes Ende (6a) einer Abtriebswelle (6) des Elektromotors drehbar gelagert ist, welches erste Lagerbauteil (14) an dem Statorring (4) drehfest abgestützt ist;
das erste Lagerbauteil (14) form- und/oder reib-/stoffschlüssig mit dem Statorring (4) verbunden ist;
bei der zumindest der Statorring (4) und der Rotor (5) innerhalb eines umfänglich geschlossenen Statorträgers (3), vorzugsweise in Form einer Hülse, höchst vorzugsweise einer geraden Kreiszylinderhülse angeordnet sind,
bei der der Statorträger (3) zumindest abschnittweise von einer Hülse (2) umgeben ist, wobei zwischen der Hülse (2) und dem Statorträger (3) wenigstens ein erster Strömungsraum (7) zum Umströmen des Statorträgers (3) mit einem Temperierfluid (8) ausgebildet ist, vorzugsweise wobei die Hülse (2) in Bereichen eine gewellte Oberfläche mit radial nach außen gerichteten Wellenbergen und radial nach innen gerichteten Wellentälern aufweist und den Statorträger in Scheitelbereichen (2a) der Wellentäler berührt, um zwischen den Scheitelbereichen (2a) den ersten Strömungsraum (7) auszubilden;
**gekennzeichnet durch**
wenigstens einen zweiten Strömungsraum (11) für ein Temperierfluid in thermischer Wirkverbindung mit einem zu temperierenden Bauteil (12), vorzugsweise einer Leistungselektronik des Elektromotors, in fluidscher Verbindung mit dem ersten Strömungsraum (7), bei der eine Fluidverbindung zwischen erstem Strömungsraum (7) und zweitem Strömungsraum (11) durch das erste Lagerbauteil (14) verläuft.

2. Lageranordnung (1) nach Anspruch 1, bei der das erste Lagerbauteil (14) über seinen Umfang verteilt eine Mehrzahl von ersten axialen Vorsprüngen (14a) aufweist, die in Umfangsrichtung voneinander beabstandet sind, mit welchen ersten Vorsprüngen (14a) das erste Lagerbauteil (14) an dem Statorring (4) festgelegt ist, wobei vorzugsweise die ersten Vorsprünge (14a) einstückig mit dem restlichen ersten Lagerbauteil (14) verbunden sind.

3. Lageranordnung (1) nach Anspruch 1 oder 2, bei der das erste Lagerbauteil (14) wenigstens einen Durchbruch (14b) aufweist, vorzugsweise einen mit seiner Öffnungsfläche im Wesentlichen quer zur Umfangsrichtung orientierten Durchbruch (14b).

4. Lageranordnung (1) nach einem der Ansprüche 1 bis 3 bei Rückbezug auf Anspruch 2, bei der die ersten Vorsprünge (14a) mit ihrer jeweiligen Au-βenseite in radialer Richtung gegenüber einem Außendurchmesser des Statorrings (4) nach innen versetzt angeordnet oder ausgebildet sind, vorzugsweise zumindest im Bereich ihres dem Statorring (4) zugewandten Endes.

5. Lageranordnung (1) nach einem der Ansprüche 1 bis 4 bei Rückbezug auf Anspruch 2, bei der das erste Lagerbauteil (14) mit wenigstens einem seiner ersten Vorsprünge (14a), vorzugsweise allen seinen ersten Vorsprüngen (14a), in Ausnehmungen (4a) an dem Statorring (4) eingreift, und/oder bei der das erste Lagerbauteil (14) mit wenigstens einem seiner ersten Vorsprünge (14a), vorzugsweise allen seinen ersten Vorsprüngen (14a), stoffschlüssig, formschlüssig und/oder kraftschlüssig mit dem Statorring (4) verbunden ist.

6. Lageranordnung (1) nach einem der Ansprüche 1 bis 5, mit einem zweiten Lagerbauteil (15), das auf einer dem ersten Lagerbauteil (14) abgewandten Seite des Statorrings (4) angeordnet ist, welches zweite Lagerbauteil (15) über seinen Umfang eine im Wesentlichen konstante axiale Erstreckung oder über seinen Umfang eine Mehrzahl von axialen zweiten Vorsprüngen (15a) aufweist, vorzugsweise gleichmäßig über den Umfang verteilt, welchen zweiten Vorsprünge (15a) höchst vorzugsweise einstückig mit dem restlichen zweiten Lagerbauteil (15) ausgebildet sind.

7. Lageranordnung (1) nach Anspruch 6, bei der die zweiten Vorsprünge (15a) mit ihrer jeweiligen Außenseite in radialer Richtung gegenüber einem Außendurchmesser des Statorrings (4) nach innen versetzt angeordnet oder ausgebildet sind, vorzugsweise an ihrem dem Statorring (4) zugewandten Ende.

8. Lageranordnung (1) nach Anspruch 6 oder 7, bei der das zweite Lagerbauteil (15) mit wenigstens einem seiner zweiten Vorsprünge (15a), vorzugsweise allen seinen zweiten Vorsprüngen (15a), in Ausnehmungen (4b) an dem Statorring (4) eingreift, und/oder bei der das zweite Lagerbauteil (15) mit wenigstens einem seiner zweiten Vorsprünge (15a), vorzugsweise allen seinen zweiten Vorsprüngen (15a), stoffschlüssig, formschlüssig und/oder kraftschlüssig mit dem Statorring (4) verbunden ist.

9. Lageranordnung (1) nach einem der Ansprüche 6 bis 8, mit einem dritten Lagerbauteil (16), an dem ein zweites Ende (6b) einer Abtriebswelle (6) des Elektromotors drehbar gelagert ist, welches dritte Lagerbauteil (16) über das zweite Lagerbauteil (15) an dem Statorring (4) drehfest abgestützt ist, welches dritte Lagerbauteil (16) vorzugsweise lösbar an dem zweiten Lagerbauteil befestigt (15) oder befestigbar ist, wobei höchst vorzugsweise zwischen dem dritten Lagerbauteil (16) und dem zweiten Lagerbauteil (16) ein Dichtmittel (20) angeordnet ist.

10. Lageranordnung (1) nach einem der Ansprüche 1 bis 9, unter Rückbezug auf Anspruch 5 und/oder Anspruch 8, bei der wenigstens einige der Ausnehmungen (4a, 4b) des Statorrings (4) in zumindest einer Raumrichtung einen schrägen Verlauf bezüglich einer Längsachse (L) der Lageranordnung (1) aufweisen, und bei der wenigstens die in diese Ausnehmungen (4a, 4b) eingreifenden ersten Vorsprünge (14a) und/oder zweiten Vorsprünge (15a) einen komplementären schrägen Verlauf ihrer Außenkontur aufweisen.

11. Lageranordnung (1) nach einem der Ansprüche 1 bis 10, bei der der Statorträger (3) wenigstens eine Lage aus einem metallischen Werkstoff mit einer Dicke von 0,5 mm bis 3,0 mm, bevorzugt etwa 1,5 mm, aufweist, und/oder bei der der Statorträger (3) wenigstens eine Lage aus einem metallischen Werkstoff mit einer Dicke von 0,1 mm bis 0,3 mm, bevorzugt etwa 0,2 mm, aufweist, und/oder bei der der Statorträger (3) wenigstens eine Lage aus einem nichtmetallischen Werkstoff aufweist, vorzugsweise einem Kunststoff.

12. Lageranordnung (1) nach einem der Ansprüche 1 bis 11, bei der zur Herstellung von Hülse (2) und Statorträger (3) ein zumindest doppelwandiges Rohrelement
a) an seinen Enden mit einer umlaufenden fluiddichten Verbindung seiner beiden Wandungen versehen wurde, vorzugsweise durch Verschweißen;
b) optional zur Herstellung der Wellenberge und Wellentäler in den Scheitelbereichen (2a) der Wellentäler mit einer fluiddichten Verbindung seiner beiden Wandungen versehen wurde, vorzugsweise durch Verschweißen;
c) zumindest abschnittweise radial um wenigstens eines der Elemente Statorring (4), erstes Lagerbauteil (14) und, bei Rückbezug auf Anspruch 6, zweites Lagerbauteil (15) herum angeordnet wurde;
d) durch Einleiten eines Umformmediums zwischen seine beiden Wandungen zumindest mit seiner radial innenliegenden Wandung als Statorträger (3) gegen das wenigstens eine Element gemäß Merkmal c) umgeformt wurde; und
e) mit einer Zuleitung (9) zum Zuleiten von Temperierfluid (8) zu dem ersten Strömungsraum (7)und einer Ableitung (10) zum Ableiten von Temperierfluid (8) aus dem ersten Strömungsraum (7) versehen wurde.

13. Elektromotor mit einer Lageranordnung (1) nach einem der vorstehenden Ansprüche, vorzugsweise mit wenigstens einem Temperierfluid (8) in dem ersten Strömungsraum (7) und/oder in dem zweiten Strömungsraum (11).
